Europäisches Patentamt

European Patent Office

Office européen des brevets

(19)

(11) Numéro de publication: **0 161 990
B1**

(12) **FASCICULE DE BREVET EUROPEEN**

(45) Date de publication du fascicule du brevet:
08.02.89

(51) Int. Cl.⁴: **B 23 K 9/30**

(21) Numéro de dépôt: **85400914.9**

(22) Date de dépôt: **10.05.85**

(54) **Dispositif de balayage d'un organe dans un plan perpendiculaire à sa direction d'avance.**

(30) Priorité: **15.05.84 FR 8407493**

(43) Date de publication de la demande:
**21.11.85 Bulletin 85/47**

(45) Mention de la délivrance du brevet:
**08.02.89 Bulletin 89/6**

(84) Etats contractants désignés:
**BE DE GB IT SE**

(56) Documents cités:
**GB-A- 2 090 434
US-A- 4 316 075
US-A- 4 434 352**

(73) Titulaire: **COMMISSARIAT A L'ENERGIE ATOMIQUE,
31/33, rue de la Fédération, F-75015 Paris (FR)**

(72) Inventeur: **Detriche, Jean-Marie, 11, rue de la Tour,
F-78360 Montesson (FR)**
Inventeur: **Houche, Didier, 10 Bis, Boulevard Dubreuil,
F-91400 Orsay (FR)**

(74) Mandataire: **Mongrédien, André et al, c/o
BREVATOME 25, rue de Ponthieu, F-75008 Paris (FR)**

## Description

La présente invention a pour objet un dispositif de balayage d'un organe dans un plan perpendiculaire à sa direction d'avance et s'applique notamment au balayage d'une torche de soudage selon deux directions contenues dans un plan de balayage perpendiculaire à sa direction d'avance afin de remplir par un cordon de soudure un joint entre deux pièces.

Toutefois, l'invention n'est pas limitée au balayage d'une torche de soudage mais s'applique aussi, par exemple, au balayage d'un capteur de contrôle non destructif, d'un outil de découpe, d'usinage, de meulage, d'encollage ou autres.

Le mouvement de balayage d'une torche de soudage est nécessaire pour le remplissage des joints d'angle ou des larges chanfreins. Ce mouvement de balayage est réalisé dans un plan perpendiculaire à l'avance de la torche de soudage le long de ce joint. Il est généralement utilisé pour des procédés à bon pouvoir de remplissage comme les procédés MIG, MAG et fil fourré.

Dans les dispositifs classiques, le mouvement de balayage est limité à une direction de balayage le long de laquelle la torche de soudage a un mouvement d'oscillation. Cette direction de balayage contenue dans le plan perpendiculaire à l'avance de la torche, est souvent parallèle à la bissectrice extérieure du joint de soudage.

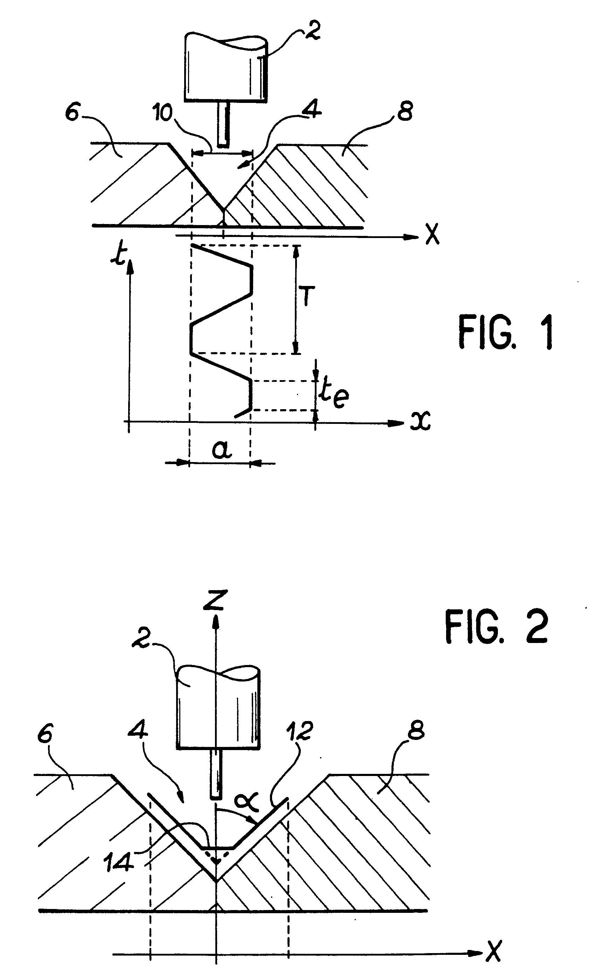

On a représenté sur la figure 1 un dessin schématique illustrant le mouvement de balayage de la torche dans les dispositifs connus. La torche de soudage 2 est présentée au droit d'un joint 4 défini par la juxtaposition de deux pièces chanfreinées 6 et 8. Ces pièces sont représentées en coupe dans un plan transversal à la direction du joint. On a indiqué par une flèche référencée 10 le mouvement de la torche de soudage 2 dans ce plan de coupe.

On a également représenté en correspondance avec ce joint, la courbe de la position x de l'extrémité de la torche de soudage 2 sur l'axe X de balayage en fonction du temps t. Le mouvement de la torche de soudage est totalement déterminé par l'amplitude $\underline{a}$ de son oscillation, la durée $t_e$ de la temporisation aux extrémités et la vitesse de balayage. Ces différentes variables, qui définissent la période T de l'oscillation, peuvent être ajustées indépendamment, ce qui permet d'optimiser le soudage quelle que soit la forme du joint et la technique de soudure utilisée.

Cette méthode n'est cependant pas toujours suffisante pour remplir parfaitement le joint avec un cordon de soudure, notamment lorsque le joint est très ouvert.

Le but de l'invention est de remédier à cela: on cherche, pour le remplissage des joints d'angle et des larges chanfreins, à engendrer un mouvement de balayage à deux dimensions dans le plan transversal à l'avance de la torche de soudage. On comprend que pour suivre au mieux le profil du joint, il est important de pouvoir faire varier indépendamment les paramètres de déplacement de la torche.

Pour atteindre ce but, on peut utiliser un système dans lequel la torche de soudage a un mouvement de balancier au-dessus du joint de soudage comme décrit dans le document US-A-4 316 075, ou un système de support de la torche de soudage à deux chariots croisés actionnés chacun par un moteur comme décrit dans les documents US-A-4 434 352 et GB-A-2 090 434. Cependant, dans ce dernier cas la génération de signaux électroniques de position synchronisés selon les deux axes de balayage est difficile à réaliser de manière simple. Une telle synchronisation n'est pas prévue dans les documents cités.

L'invention a précisément pour objet un dispositif de balayage qui engendre de manière simple des déplacements suivant chacune des deux directions de balayage.

D'une manière précise, l'invention a pour objet un dispositif de balayage d'un organe dans un plan perpendiculaire à sa direction d'avance, comprenant un premier moyen de déplacement de l'organe suivant une première direction contenue dans le plan de balayage, un second moyen de déplacement de l'organe suivant une seconde direction contenue dans le plan de balayage, un moyen de commande en vitesse relié au premier moyen de déplacement et définissant la loi du mouvement suivant la première direction, un moyen de commande en position relié au second moyen de déplacement et définissant la loi du mouvement selon la seconde direction, ledit moyen de commande en position recevant un signal de position délivré par un codeur de position associé au moyen de déplacement suivant la première direction et lesdits moyens de commande étant synchronisés par un signal fonction du résultat de la comparaison entre l'amplitude dudit signal de position et une amplitude de consigne.

De manière préférée, les directions de balayage sont perpendiculaires entre elles et à la direction d'avance. Dans le cas du soudage, ce sont de manière préférée la bissectrice extérieure du joint et la bissectrice intérieure du joint.

Selon une autre caractéristique du dispositif selon l'invention, des moyens de réglage sont prévus pour déterminer la loi du mouvement selon chaque direction.

Selon une caractéristique secondaire, les moyens de réglage associés au moyen de commande en vitesse comprennent un moyen de réglage de la vitesse par l'amplitude du signal de commande en vitesse, un moyen de réglage de la durée de temporisation par la durée d'une impulsion déclenchée par un signal de synchronisation et un moyen de réglage de l'amplitude du déplacement suivant la première direction de balayage.

Selon une autre caractéristique secondaire, les moyens de réglage associés au moyen de commande en position comprennent un moyen de réglage de la pente du joint, par un gain appliqué au signal de position selon la première direction, un moyen de réglage de l'arrondi par un décalage de signal et un redressement et un moyen de décalage suivant la seconde direction de balayage par un nouveau décalage de signal.

D'autres caractéristiques et avantages de l'invention ressortiront mieux de la description qui va suivre, donnée à titre illustratif mais non limitatif, en référence aux figures annexées, dans lesquelles:

- la figure 1, déjà décrite, illustre le mouvement de balayage à une seule dimension d'une torche de soudage selon l'art connu,
- la figure 2 est une vue en coupe d'un joint de soudage, illustrant un mouvement de balayage de la torche de soudage selon l'invention,
- les figures 3a et 3b sont des chronogrammes illustrant les lois de mouvement de la torche de soudage selon les directions de balayage X et Z de la figure 2,
- la figure 4 représente un schéma fonctionnel du dispositif selon l'invention,
- les figures 5a et 5b illustrent un mode de réalisation du circuit de génération de la loi de mouvement selon la direction Z en fonction du signal de vitesse suivant la direction X,
- la figure 6 est un chronogramme des signaux produits par les circuits des figures 5a et 5b,
- la figure 7 est un mode de réalisation du circuit de génération du signal de déplacement suivant la direction X en fonction du signal de vitesse suivant cette même direction,
- la figure 8 est un chronogramme des signaux du circuit de la figure 7.
- les figures 9a et 9b sont des chronogrammes illustrant les lois de mouvement de la torche de soudage, dans lequel on décale le mouvement de balayage par rapport à la direction X,
- la figure 10 est un schéma fonctionnel du dispositif de l'invention pour la mise en œuvre du mouvement de balayage représenté sur les figures 9a et 9b,
- les figures 11a et 11b sont des chronogrammes illustrant les lois de mouvement de la torche de soudage, dans lequel le balayage selon la direction Z est limité aux instants où la torche de soudage se déplace dans un sens donné selon la direction X,
- la figure 12 est un schéma fonctionnel du dispositif de l'invention pour la mise en œuvre du mouvement de balayage représenté sur les figures 11a et 11b.

La figure 2 illustre un mouvement de balayage de la torche de soudage 2 réalisé par le dispositif de balayage selon l'invention. Le mouvement de balayage est obtenu par la combinaison de deux mouvements d'oscillations selon deux directions perpendiculaires X et Z, qui, dans cet exemple, sont parallèles respectivement à la bissectrice extérieure du joint 4 défini par la juxtaposition des deux pièces 6 et 8, et à la bissectrice intérieure de ce même joint. D'autres directions peuvent être choisies. Ces directions sont de préférence perpendiculaires entre elles.

Le lieu de la torche de soudage 2 dans ce plan de balayage est représenté par la courbe 12. En réalité, la torche ayant un mouvement d'avance dans la direction du joint en même temps qu'un mouvement de balayage, la courbe 12 ne représente pas le mouvement de balayage de la torche dans un plan fixe mais la projection de ce mouvement dans un plan fixe. Dans ce plan fixe, la courbe 12 est de préférence parallèle aux flancs du joint. Elle peut présenter un arrondi dans sa partie inférieure, c'est-à-dire au centre de la course de la torche suivant l'axe $\underline{X}$, permettant le réglage de la quantité de métal déposé. Par «arrondi», il faut comprendre que l'on supprime l'angle formé par la trajectoire de la torche à la verticale du joint lorsqu'elle se déplace, suivant la direction X, à altitude constante au-dessus des flancs du joint. Une manière simple de réaliser cet arrondi consiste à bloquer la position de la torche suivant l'axe Z. La torche décrit alors le segment de courbe référencé 14.

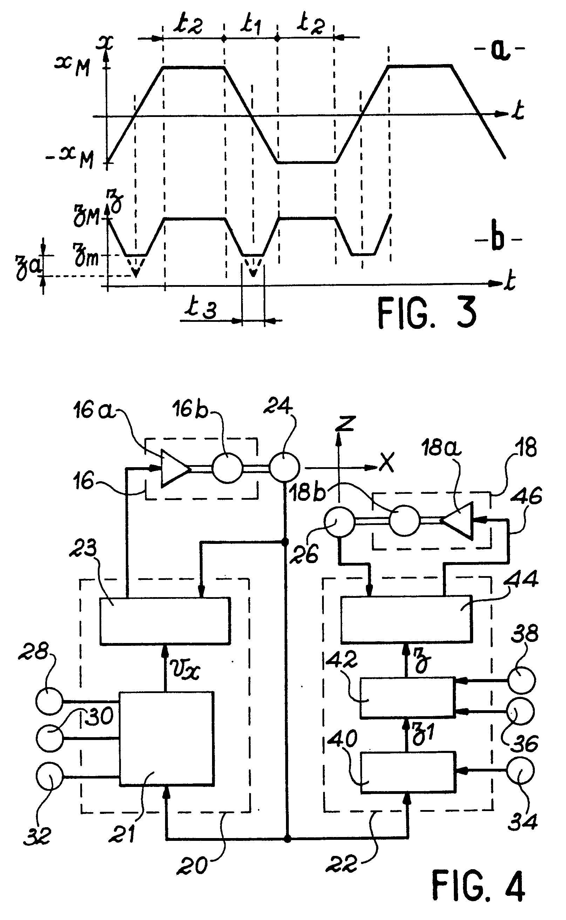

Selon l'invention, les mouvements d'oscillations de la torche suivant les deux axes X et Z sont synchronisés. Il est clair que cette synchronisation doit tenir compte de la valeur $\alpha$ de l'angle d'ouverture du joint. On a représenté sur les figures 3a et 3b des chronogrammes représentant ces mouvements d'oscillations synchronisés.

Le mouvement selon l'axe X est défini par trois paramètres: l'amplitude $x_M$ du mouvement, la vitesse $v_x$ du mouvement qui est liée à la durée $t_1$ pour déplacer la torche de soudage de la position $-x_M$ à la position $+x_M$, et la durée $t_2$ de temporisation lorsque la torche est dans la position $\pm x_M$. Pendant cette durée $t_2$, il n'y a pas de mouvement de balayage. La torche est bloquée suivant les directions X et Z, mais la torche peut se déplacer suivant la direction d'avance perpendiculaire au plan de balayage.

Pour suivre le profil du joint, il faut que le mouvement suivant l'axe Z soit synchronisé avec le mouvement suivant l'axe X. La figure 3b représente l'allure du mouvement d'oscillation de la torche de soudage suivant l'axe Z. Ce mouvement est défini par les amplitudes minimale $z_m$ et maximale $z_M$ de la torche. La durée de la temporisation de la torche dans les positions $(x_M, z_M)$ et $(-x_M, z_M)$ est égale à $t_2$. La durée $t_3$ du blocage de la torche suivant l'axe Z est liée à la valeur $z_a$ qui définit l'arrondi et à la vitesse $v_z$ de déplacement de la torche suivant l'axe Z qui est elle-même fonction de la vitesse $v_x$ de déplacement suivant l'axe X et de la pente $\alpha$ du joint.

Ce mouvement de balayage à deux dimensions est produit de façon simple par le dispositif de l'invention. Un tableau synoptique de ce dispositif est représenté sur la figure 4.

Ce dispositif comprend un premier moyen de déplacement 16 pour engendrer un mouvement de la torche de soudage suivant l'axe X, un second moyen de déplacement 18 pour engendrer un mouvement de la torche de soudage suivant l'axe Z, un moyen de commande 20 du premier moyen de déplacement 16, un moyen de commande 22 du second moyen de déplacement 18, un codeur de position 24 suivant l'axe X délivrant un signal de consigne au moyen de commande 20 et un codeur de position 26 suivant l'axe Z délivrant un signal de consigne au moyen de commande 22. Le dispositif comprend enfin des moyens de réglage 28, 30, 32, 34, 36 et 38 permettant de définir les lois du mouvement suivant chacun des axes de balayage.

La synchronisation des moyens de commande 20 et 22 est réalisée par un signal d'impulsions délivré par un comparateur recevant le signal issu du codeur de position 24 et le signal délivré par les moyens de réglage 28, et détectant l'égalité de ces signaux, le changement d'état du comparateur commandant l'état (bloqué, débloqué) de la torche de soudage suivant chaque direction dé balayage.

Chaque moyen de déplacement 16, 18 comprend un amplificateur 16a, 18a et un moteur 16b, 18b. La rotation du moteur 16b est commandée en vitesse de manière classique, chaque phase de fonctionnement de vitesse, de sens et de durée déterminés correspondant à une impulsion d'amplitude, de signe et de durée déterminés.

Selon l'invention, le moyen de commande 20 de déplacement suivant l'axe X délivre un signal de commande en vitesse au moyen de déplacement 16. Ce moyen de commande comprend un moyen de traitement 21 et un moyen d'asservissement en vitesse 23.

Le moyen de traitement 21 reçoit le signal de position x délivré par le codeur de position 24 et des signaux délivrés par les moyens de réglage 28, 32, et 30 fixant respectivement l'amplitude $x_M$ du mouvement suivant l'axe X, la vitesse de ce mouvement et la durée $t_2$ de la temporisation dans les positions d'amplitudes maximales $\pm x_M$. Il délivre un signal $v_x$ de commande en vitesse au moyen d'asservissement en vitesse 23. Ce dernier commande en vitesse le moteur du premier moyen de déplacement 16 afin de rendre identiques la vitesse de commande $v_x$ et la variation $dx/dt$ du signal x délivré par le codeur de position 24. Ce moyen 23 n'est pas obligatoire mais peut être utile dans le cas de commande en petite vitesse.

Le second moyen de commande 22 réalise une commande en position de la torche de soudage suivant l'axe Z. Ce moyen de commande comprend en série un moyen amplificateur et redresseur 40, un moyen de traitement 42 et un moyen d'asservissement en position 44.

Le moyen amplificateur et redresseur 40 reçoit le signal de position x délivré par le codeur de position 24 et un signal indicateur de la pente α du joint déterminé par le moyen de réglage 34. Il délivre un signal $z_1$. Ce signal est reçu par le moyen de traitement 42 qui reçoit par ailleurs des signaux de décalage délivrés par les moyens de réglage 36 et 38. Ces moyens de réglage déterminent respectivement l'arrondi et un décalage suivant l'axe Z de la trajectoire de la torche. Le signal de position z délivré par ce moyen de traitement est reçu par le moyen d'asservissement en position 44. Ce dernier commande par une connexion 46 le moteur du second moyen de déplacement 18 afin de rendre identiques la position désirée de la torche définie par le signal z et la position réelle de la torche indiquée par le codeur de position 26.

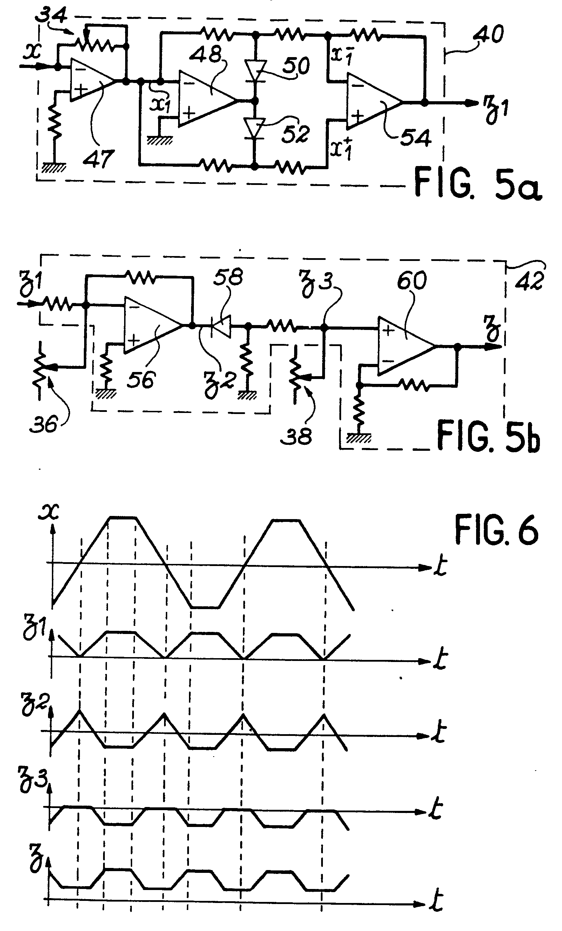

On va maintenant décrire un mode de réalisation de chacun des moyens de traitement 21 et 42 et du moyen 40. Les figures 5a et 5b représentent respectivement un mode de réalisation du moyen amplificateur et redresseur 40 et du moyen de traitement 42 du moyen de commande 22.

Le moyen amplificateur et redresseur 40 représenté sur la figure 5a délivre un signal $z_1$ en fonction du signal de position x délivré par le capteur de position suivant l'axe X.

Il comprend un étage amplificateur et un étage redresseur. L'étage amplificateur est constitué d'un amplificateur différentiel 47 monté en amplificateur de tension à gain négatif avec une résistance réglable de contre-réaction qui constitue le moyen de réglage 34. Le signal $x_1$ délivré par l'étage amplificateur est ensuite redressé par l'étage redresseur. Celui-ci comprend un premier amplificateur différentiel 48 dont l'entrée positive est à la masse et deux chaînes de contre-réaction constituées chacune d'une diode 50, 52 et d'une résistance. Dans les deux chaînes, les diodes sont de sens opposé. Sur la cathode de la diode 50 apparaissent les alternances négatives du signal $x_1$, sur l'anode de la diode 50, les alternances positives du signal $x_1$. Ces signaux sont appliqués respectivement sur les entrées inverseuses et non-inverseuses d'un amplificateur différentiel 54 qui délivre un signal $z_1$ égal au signal $x_1$ redressé.

Le signal $z_1$ est représenté en correspondance avec le signal x sur la figure 6. Le rapport des amplitudes de ces signaux, et par conséquent le rapport des pentes de ces signaux, est lié à l'angle α du joint (figure 2). Cette relation est fixée par le moyen de réglage 34.

La figure 5b représente un mode de réalisation du moyen de traitement 42 du signal de position z à partir du signal $z_1$. Le signal $z_1$ est d'abord reçu dans un circuit comprenant un amplificateur différentiel 56 monté en inverseur de tension et le moyen de réglage de l'arrondi 36. Cet ensemble réalise un décalage puis une inversion du signal $z_1$. Le signal produit, noté $z_2$, est représenté sur la figure 6. Ce signal est appliqué sur l'anode d'une diode 58, ce qui écrête sa partie positive. Le signal $z_3$ résultant est représenté sur la figure 6. Ce signal est traité de la même manière que le signal $z_1$, c'est-à-dire qu'il est reçu dans un ensemble comprenant un moyen de décalage 38 et un amplificateur différentiel 60 monté en inverseur de tension. Le signal z obtenu représente la commande en position de la torche de soudage suivant la direction de balayage Z au cours du temps.

Ce signal de commande z est reçu dans le moyen d'asservissement de position 44 (figure 4) qui commande de manière classique le moteur du moyen de déplacement 18 de manière à ce que le codeur de position 26 suivant la direction Z indique une position de la torche de soudage selon une consigne de position.

Selon l'invention, le déplacement suivant l'autre direction de balayage X est réalisé par une commande en vitesse. Le moyen de traitement du moyen de commande suivant cet axe reçoit en entrée la position x de la torche suivant l'axe X et délivre en sortie un signal de commande en vitesse

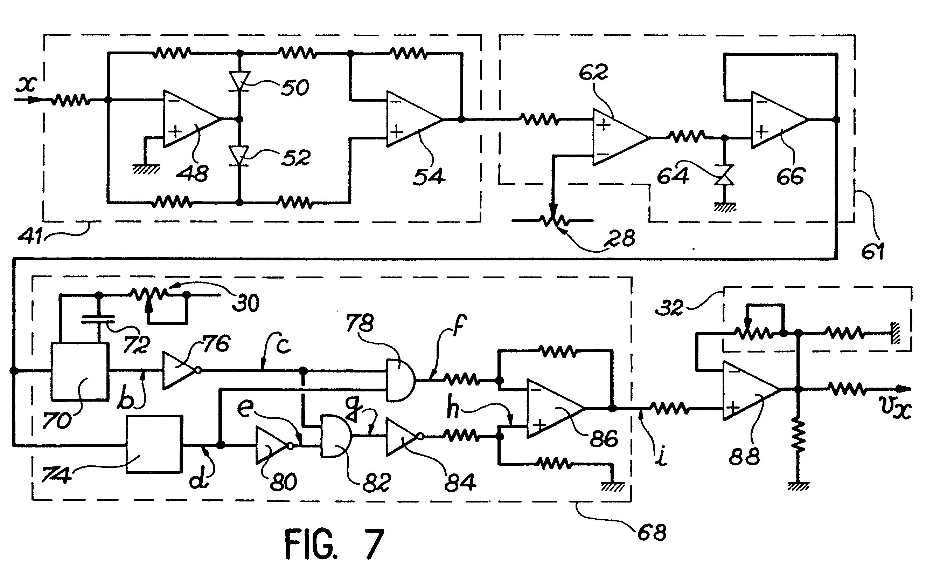

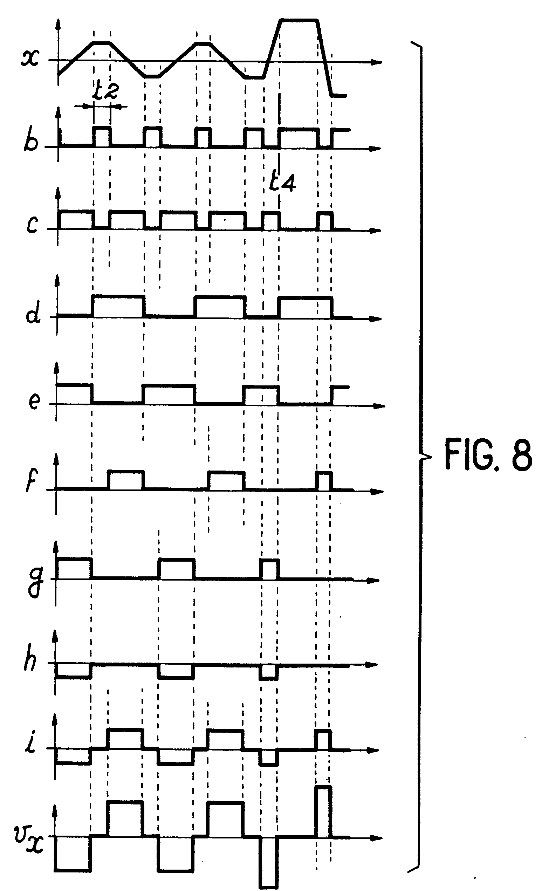

$v_x$ de la torche suivant cet axe. Ce signal de tension se présente sous la forme d'une succession de créneaux positifs, nuls et négatifs, commutés séquentiellement par des impulsions temporelles engendrées lorsque la torche atteint deux positions extrêmes $x_M$ et $-x_M$, selon l'axe X. On a représenté sur la figure 7, un mode de réalisation de ce moyen de traitement et sur la figure 8 un chronogramme des principaux signaux de ce moyen de traitement.

Le signal de position x reçu par le moyen de traitement est d'abord redressé par un moyen 41 identique à l'étage redresseur du moyen 40 de la figure 5a. Ce signal redressé est reçu ensuite sur l'entrée non inverseuse d'un comparateur 62, élément d'un moyen de numérisation 61. Sur son entrée inverseuse, le comparateur 62 reçoit un signal de référence défini par le moyen de réglage 28 qui définit ainsi l'amplitude $x_M$ du mouvement suivant l'axe X. Le signal à deux états délivré par le comparateur 62 est ensuite traité par un ensemble comprenant une diode Zener 64 et un amplificateur 66 dont la sortie est rebouclée sur l'entrée inverseuse. Cet ensemble transforme le signal délivré par le comparateur 62 en un signal logique (de niveau TTL si la diode Zener a une tension d'écrêtage de 4,7 V) ce qui permet son traitement par des moyens logiques.

Ce signal logique délivré par le moyen 61 est donc à l'état haut lorsque la valeur absolue de l'abscisse de la torche de soudage est supérieure ou égale à $x_M$ et à l'état bas dans le cas contraire. Ce signal est traité par un moyen 68 qui délivre des créneaux de tension commandant en grandeur et en signe la vitesse de déplacement de la torche de soudage selon l'axe X.

Le signal délivré par le moyen 61 est reçu dans un circuit monostable 70 dont la période est fixée par une capacité 72 et une résistance réglable constituant le moyen de réglage 30. Le signal b délivré par le circuit monostable 70 est représenté sur la figure 8. Le moyen de réglage 30 qui détermine la durée des impulsions du signal b permet de fixer la durée de la temporisation de la torche de soudage dans les positions d'amplitude maximale suivant l'axe X.

Le signal logique délivré par le moyen 61 est appliqué d'autre part sur l'entrée d'une bascule bistable 74 qui délivre un signal d représenté sur la figure 8. Ce signal d est reçu sur une entrée d'une porte ET 78 dont l'autre entrée reçoit le signal c obtenu par inversion du signal b dans un inverseur logique 76. Une autre porte ET 82 reçoit en entrée le signal c et le signal e obtenu par inversion du signal d dans un inverseur logique 80.

Les signaux f et g produits par ces portes ET 78 et 82 sont représentés sur la figure 8. Ce sont des signaux en créneaux qui sont à l'état haut lorsque la torche de soudage a une vitesse respectivement négative et positive suivant l'axe X.

Le circuit 68 comprend enfin un sommateur constitué d'un amplificateur différentiel 86 recevant sur son entrée inverseuse le signal f et sur son entrée non inverseuse le signal h obtenu par inversion du signal g dans un inverseur logique 84.

Le signal i produit par ce circuit 68 est représenté sur la figure 8. C'est un signal bipolaire en créneau indiquant le signe de la vitesse suivant l'axe X. La vitesse de déplacement suivant l'axe X est constante et de même signe que ce signal i.

Ce signal est enfin reçu dans un amplificateur différentiel 88 dont le gain peut être ajusté par une résistance réglable constituant le moyen de réglage 32. Le signal $v_x$ délivré est proportionnel au signal i et son amplitude, fixée par le moyen de réglage 32, définit la vitesse de la torche suivant l'axe X.

Le signal de position x de la torche de soudage représenté sur la figure 8 correspond à trois oscillations. Pendant les deux premières oscillations, les signaux délivrés par les moyens de réglage sont constants.

La troisième oscillation est différente car on a modifié la vitesse, l'amplitude du mouvement et la durée de temporisation du mouvement de la sonde en agissant sur les moyens de réglage 32, 28 et 30.

La modification de la vitesse apparaît sur le signal $v_x$ où les deux dernières impulsions ont une amplitude plus importante que les impulsions précédentes.

La modification de l'amplitude du mouvement se traduit par un front montant de l'impulsion du signal b à la date $t_4$ pour une amplitude du signal x plus grande que pour les impulsions précédentes du signal b.

Enfin, la modification de la durée de la temporisation se traduit par une largeur d'impulsion différente du signal b.

On a montré la modification du mouvement d'oscillation x de la torche de soudage lorsque les signaux délivrés par chacun des moyens de réglage sont modifiés. Il est clair que ces modifications sont indépendantes et que l'on peut agir également sur un seul moyen de réglage.

Les circuits décrits en référence aux figures 5a, 5b et 7 sont donc aptes à commander les mouvements d'oscillations de la torche de soudage suivant deux directions, ce qui engendre le mouvement de balayage. Des moyens de réglage associés à ces moyens de commande permettent de faire varier indépendamment chaque paramètre des lois des mouvements d'oscillations.

Le lancement du dispositif de balayage se fait automatiquement à la mise sous tension. Au lancement du moteur et selon la position initiale de la torche de soudage, un mouvement transitoire de la torche peut se produire avant le mouvement nominal de balayage. Quel que soit le signe du créneau de tension de lancement du moteur, ce mouvement transitoire ramènera la torche dans une position normale.

Ce mouvement transitoire a lieu si, au lancement du moteur, le codeur de position suivant l'axe X indique une amplitude supérieure (respectivement inférieure) à l'amplitude maximale $x_M$ (respectivement minimale $-x_M$) définie par le moyen de réglage 28.

Dans ce cas, le comparateur 62 (figure 7) détecte le dépassement de position et engendre une impulsion (signal b) qui elle-même crée un créneau de vitesse. Si ce créneau de vitesse produit un mouvement qui augmente l'amplitude de la torche de soudage, le comparateur 62 engendre à nouveau une impulsion (signal b) qui crée un créneau de vitesse de signe opposé. La torche de soudage a alors un mouvement la ramenant dans la plage $[-x_M, +x_M]$; le mouvement de la torche est ensuite le mouvement de balayage normal. Si le premier créneau de vitesse ramène la torche dans la plage $[-x_M, +x_M]$, le fonctionnement de balayage normal se produit sans qu'une nouvelle impulsion soit émise par le comparateur.

Enfin, dans le cas où la position de la torche de soudage est comprise entre $-x_M$ et $+x_M$ au lancement du moteur, le mouvement de balayage normal se produit dès l'origine.

Les figures 4 à 8 qui viennent d'être décrites illustrent un dispositif pour la mise en œuvre du mouvement de balayage représenté sur les figures 3a et 3b et le fonctionnement de ce dispositif.

Le mouvement de balayage décrit ne représente qu'un exemple de mouvement de balayage qui peut être produit conformément à l'invention. On va décrire successivement deux variantes de ce mouvement de balayage et on va indiquer les modifications apportées au dispositif de la figure 4 pour la mise en œuvre de ces variantes.

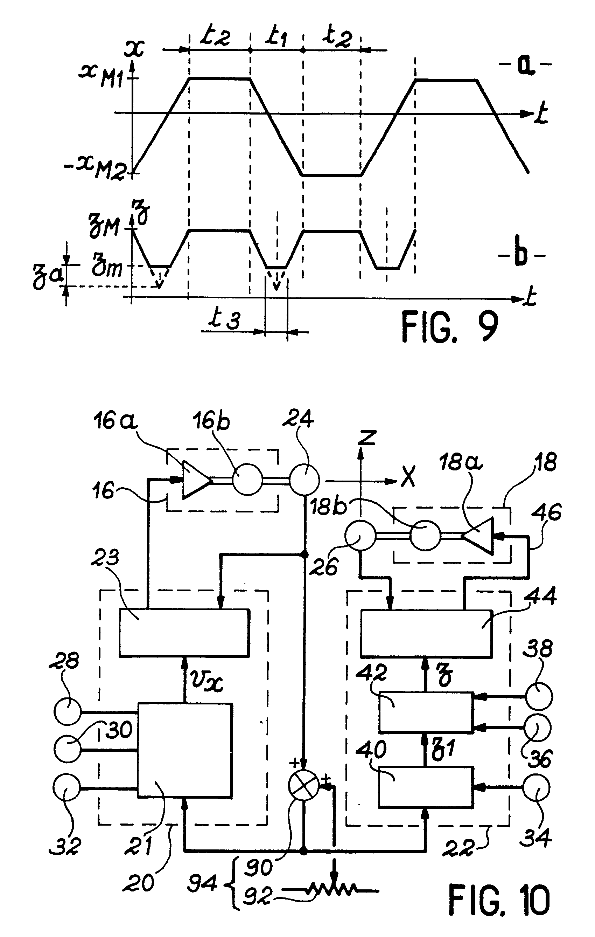

Les chronogrammes des figures 9a et 9b illustrent une première variante dans laquelle le mouvement de balayage n'est plus centré sur l'axe du joint mais décalé selon la direction X. Sur ces chronogrammes, les références identiques à celles des chronogrammes des figures 3a et 3b ont la même signification.

Le mouvement selon la direction X est compris entre les amplitudes $X_{M1}$ et $-X_{M2}$. Celles-ci ne sont pas identiques.

Le mouvement de balayage représenté sur les figures 9a et 9b est mis en œuvre par le dispositif de la figure 10. Celui-ci est pratiquement identique au dispositif décrit en référence à la figure 4. Il en diffère uniquement par l'ajout d'un sommateur 90 qui reçoit d'une part le signal délivré par le codeur de position 24 et d'autre part un signal de décalage produit par un potentiomètre 92. Le signal délivré par le sommateur 90 constitue le signal de consigne appliqué aux moyens de commande 20 et 22.

L'ensemble sommateur 90 et potentiomètre 92 constitue un moyen de réglage 94 du décalage selon la première direction X.

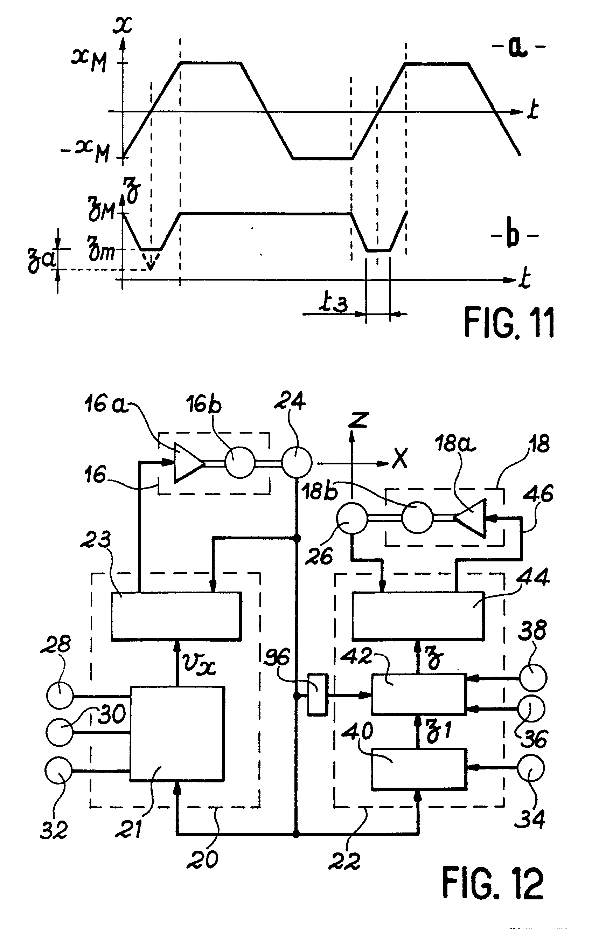

On a représenté sur les figures 11a et 11b une autre variante du mouvement de balayage de la torche de soudage. Le déplacement de la torche est bloqué selon la direction Z lorsqu'elle se déplace dans un sens particulier, ici le sens décroissant, selon la première direction X.

Pour mettre en œuvre ce mouvement de balayage, on utilise un dispositif tel que celui de la figure 4 dans lequel on a ajouté un moyen 96 recevant le signal de position délivré par le codeur de position 24 et délivrant un signal au moyen de traitement 42. On a en outre disposé un interrupteur derrière la diode 58 (figure 5b) pour appliquer à l'amplificateur différentiel 60 soit le signal $z_3$, soit un signal nul.

Cet interrupteur est commandé par un relais activé par le signal délivré par le moyen 96. Ce dernier comprend un dérivateur suivi d'un détecteur de signe. Lorsque le signe du signal dérivé est négatif, le moyen 96 commande l'interrupteur pour relier l'entrée de l'amplificateur différentiel 60 à la masse; lorsque le signe du signal dérivé est positif ou nul, le moyen 96 commande l'interrupteur pour appliquer le signal $z_3$ à l'amplificateur différentiel 60.

**Revendications**

1. Dispositif de balayage d'un organe (2) dans un plan de balayage (X, Z) perpendiculaire à sa direction d'avance, comprenant un premier moyen de déplacement (16) de l'organe suivant une première direction (X) contenue dans le plan de balayage, un second moyen de déplacement (18) de l'organe suivant une seconde direction (Z) contenue dans le plan de balayage, un moyen de commande en vitesse (20) relié au premier moyen de déplacement (16) et définissant la loi du mouvement suivant la première direction (X) et un codeur de position (24) associé au moyen de déplacement suivant la première direction, ledit dispositif étant caractérisé en ce qu'il comprend un moyen de commande en position (22) relié au second moyen de déplacement (18) et définissant la loi du mouvement selon la seconde direction (Z), ledit moyen de commande en position recevant un signal de position délivré par ledit codeur de position (24), lesdits moyens de commande (20, 22) étant synchronisés par un signal fonction du résultat de la comparaison entre l'amplitude dudit signal de position et une amplitude de consigne.

2. Dispositif selon la revendication 1, caractérisé en ce que le moyen de commande en vitesse délivre un signal d'impulsions au premier moyen de déplacement.

3. Dispositif selon l'une quelconque des revendications 1 et 2, caractérisé en ce que des moyens de réglage reliés aux moyens de commande déterminent la loi du mouvement selon chaque direction.

4. Dispositif selon la revendication 3, caractérisé en ce que les moyens de réglage associés au moyen de commande en vitesse (20) comprennent un moyen de réglage (32) de la vitesse, un moyen de réglage (30) de la durée de temporisation et un moyen de réglage (28) de l'amplitude du déplacement selon la première direction (X).

5. Dispositif selon la revendication 4, caractérisé en ce que le moyen de réglage (32) de la vitesse et le moyen de réglage (30) de la durée de la temporisation agissent respectivement sur l'amplitude et la durée des impulsions délivrées par le moyen de commande en vitesse.

6. Dispositif selon la revendication 4, caractérisé en ce que le moyen de réglage (28) de l'amplitude fixe l'amplitude de consigne.

7. Dispositif selon la revendication 3, caractérisé en ce que les moyens de réglage associés au moyen de commande en position (22) comprennent un moyen de réglage (34) de la pente du joint, un moyen de réglage (36) de l'arrondi et un moyen de réglage (38) du décalage suivant la seconde direction (Z).

8. Dispositif selon la revendication 7, caractérisé en ce que le moyen de réglage (34) de la pente du joint applique un gain au signal de position (x) selon la première direction (X).

9. Dispositif selon la revendication 7, caractérisé en ce que le moyen de réglage (36) de l'arrondi réalise un décalage de signal et un redressement de signal.

10. Dispositif selon la revendication 7, caractérisé en ce que le moyen de réglage (38) du décalage réalise un décalage de signal.

11. Dispositif selon l'une quelconque des revendications 1 à 10, caractérisé en ce que le moyen (20) de commande en vitesse (20) comprend un moyen de traitement (21) qui reçoit le signal x délivré par le codeur de position (24) et qui délivre un signal de commande en vitesse $v_x$ et un moyen d'asservissement en vitesse (23) qui commande en vitesse le moyen de déplacement (16) selon la consigne en vitesse $v_x$.

12. Dispositif selon l'une quelconque des revendications 1 à 10, caractérisé en ce qu'il comprend un codeur de position (26) et en ce que le moyen de commande en position (22) comprend en série un moyen amplificateur et redresseur (40) recevant le signal x, un moyen de traitement (42) délivrant un signal de commande en position z et un moyen d'asservissement en position (44) qui commande en position le moyen de déplacement (18) selon la consigne en position z et le signal de position délivré par le codeur en position (26).

**Patentansprüche**

1. Vorrichtung zum Abtasten eines Gegenstands (2) in einer Abtastebene (X, Z) senkrecht zu seiner Fortbewegungsrichtung, mit einer ersten Vorschubeinrichtung (16) zum Bewegen des Gegenstands in einer ersten in der Abtastebene enthaltenen Richtung (X), einer zweiten Vorschubeinrichtung (18) zum Bewegen des Gegenstands in einer zweiten in der Abtastebene enthaltenen Richtung (Z) einer mit der ersten Vorschubeinrichtung (16) verbundenen Geschwindigkeitssteuerung (20), welche das Gesetz der Bewegung in der ersten Richtung (X) bestimmt, und mit einem der Vorschubeinrichtung für die Bewegung in der ersten Richtung zugeordneten Stellungsgeber (24), dadurch gekennzeichnet, dass die Vorrichtung eine mit der zweiten Vorschubeinrichtung (18) verbundene Positionssteuerung (22) aufweist, welche das Gesetz der Bewegung in der zweiten Richtung (Z) bestimmt und mit einem von dem Stellungsgeber (24) erzeugten Stellungssignal gespeist ist, und dass die beiden Steuerungen (20, 22) durch ein dem Ergebnis des Vergleichs der Amplitude des Stellungssignals mit einer Bezugsamplitude proportionales Signal synchronisiert sind.

2. Vorrichtung nach Anspruch 1, dadurch gekennzeichnet, dass die Geschwindigkeitssteuerung die erste Vorschubeinrichtung mit einem Impulssignal speist.

3. Vorrichtung nach einem der Ansprüche 1 und 2, dadurch gekennzeichnet, dass das Gesetz der Bewegung in jeder Richtung durch eine mit den Steuerungen verbundene Regeleinrichtung bestimmt ist.

4. Vorrichtung nach Anspruch 3, dadurch gekennzeichnet, dass die der Geschwindigkeitssteuerung (20) zugeordnete Regeleinrichtung eine Einrichtung (32) zum Regeln der Geschwindigkeit, eine Einrichtung (30) zum Regeln der Verzögerungsdauer und eine Einrichtung (28) zum Regeln der Grösse der Bewegung in der ersten Richtung (X) aufweist.

5. Vorrichtung nach Anspruch 4, dadurch gekennzeichnet, dass die Einrichtung (32) zum Regeln der Geschwindigkeit und die Einrichtung (30) für die Verzögerungsdauer die Amplitude bzw. die Dauer der von der Geschwindigkeitssteuerung erzeugten Impulse steuern.

6. Vorrichtung nach Anspruch 4, dadurch gekennzeichnet, dass die Einrichtung (28) zum Regeln der Bewegungsgrösse die Bezugsamplitude bestimmt.

7. Vorrichtung nach Anspruch 3, dadurch gekennzeichnet, dass die der Positionssteuerung (22) zugeordnete Regeleinrichtung eine Einrichtung (34) zum Regeln der Flankensteigung, eine Einrichtung (36) zum Regeln der Rundung und eine Einrichtung (38) zum Regeln der Verschiebung in der zweiten Richtung (Z) aufweist.

8. Vorrichtung nach Anspruch 7, dadurch gekennzeichnet, dass die Einrichtung (34) zum Regeln der Flankensteigung dem auf die erste Richtung (X) bezogenen Positionssignal (x) eine Verstärkung erteilt.

9. Vorrichtung nach Anspruch 7, dadurch gekennzeichnet, dass die Einrichtung (36) zum Regeln der Rundung eine Verschiebung des Signals und eine Gleichrichtung des Signals bewirkt.

10. Vorrichtung nach Anspruch 7, dadurch gekennzeichnet, dass die Einrichtung (38) zum Regeln der Verschiebung eine Verschiebung des Signals bewirkt.

11. Vorrichtung nach einem der Ansprüche 1 bis 10, dadurch gekennzeichnet, dass die Geschwindigkeitssteuerung (20) einen Prozessor (21) aufweist, welcher mit dem vom Stellungsgeber (24) erzeugten Signal (x) gespeist ist und ein Geschwindigkeits-Steuersignal ($v_x$) erzeugt, sowie eine Geschwindigkeits-Steuereinrichtung (23), welche die Geschwindigkeit der Vorschubeinrichtung (16) in Abhängigkeit von dem Geschwindigkeits-Steuersignal ($v_x$) steuert.

12. Vorrichtung nach einem der Ansprüche 1 bis 10, dadurch gekennzeichnet, dass sie einen Stellungsgeber (26) aufweist und dass die Positionssteuerung (22) eine mit dem Signal (x) gespeiste Verstärker- und Gleichrichteranordnung (40), einen Prozessor (42) zum Erzeugen eines Positions-Steuersignals (z) und eine Positions-Steuereinrichtung (44) aufweist, welche die Position der Vorschubeinrichtung (18) in Abhängigkeit vom Positions-Steuersignal (z) und von dem vom Stellungsgeber (26) erzeugten Stellungssignal steuert.

## Claims

1. Apparatus for scanning a member (2) in a plane (X, Y) perpendicular to its forward movement direction, comprising a first means (16) for the displacement of the member in a first direction (X) contained in the scanning plane, a second means (18) for the displacement of the member in a second direction (Z) contained in the scanning plane, a speed control means (20) connected to the first displacement means (16) and defining the law of motion in said first direction (X) and a position coder (24) associated with the displacement means in the first direction, characterized in that it comprises a position control means (22) connected to the second displacement means (18) and defining the law of motion in the second direction (Z), said position control means receiving a position signal supplied by said position coder (24), said control means (20, 22) being synchronized by a signal which is a function of the result of the comparison between the amplitude of said position signal and a reference amplitude.

2. Apparatus according to claim 1, characterized in that the speed control means supplies a pulse signal to the first displacement means.

3. Apparatus according to either of the claims 1 and 2, characterized in that the regulating means connected to the control means determine the law of motion in each direction.

4. Apparatus according to claim 3, characterized in that the regulating means associated with the speed control means (20) comprise a means (32) for regulating the speed, a means (30) for regulating the time lag period and a means (28) for regulating the amplitude of the displacement in the first direction (X).

5. Apparatus according to claim 4, characterized in that the speed regulating means (32) and the time lag regulating means (30) respectively act on the amplitude and duration of the pulses supplied by the speed control means.

6. Apparatus according to claim 4, characterized in that the amplitude regulating means (28) fixes the reference amplitude.

7. Apparatus according to claim 3, characterized in that the regulating means associated with the position control means (22) comprise a means (34) for regulating the slope of the joint, a means (36) for regulating the rounded portion and a means (38) for regulating the displacement in said second direction (Z).

8. Apparatus according to claim 7, characterized in that the means (34) for regulating the slope of the joint applies a gain to the position signal (x) along the first direction (X).

9. Apparatus according to claim 7, characterized in that the means (36) for regulating the rounded portion brings about a displacement and a rectification of the signal.

10. Apparatus according to claim 7, characterized in that the means (38) for regulating the displacement effects a signal displacement.

11. Apparatus according to any one of the claims 1 to 10, characterized in that the speed control means (20) comprises a processing means (21), which receives the signal (x) supplied by the position coder (24) and which supplies a speed control signal $(v_x)$, as well as a speed servocontrol means (23) controlling the speed of the displacement means (16) in accordance with the speed reference $(v_x)$.

12. Apparatus according to any one of the claims 1 to 10, characterized in that it comprises a position coder (26) and in that the position control means (22) comprises in series an amplifier and rectifier means (40) receiving the signal (x), a processing means (42) supplying a position control signal (z) and a position servocontrol means (44) controlling the position of the displacement means (18) in accordance with the position reference (z) and the position signal supplied by the position coder (26).

FIG. 1

FIG. 2

2 / 7

FIG. 3

FIG. 4

EP 0 161 990 B1

3/7

FIG. 5a

FIG. 5b

FIG. 6

13

FIG. 7

FIG. 8

FIG. 9

FIG. 10

7 / 7

FIG. 11

FIG. 12